# FASCICULE DE BREVET EUROPEEN

(11) **EP 3 436 355 B1**
(45) Date de publication et mention de la délivrance du brevet: **11.03.2020**
(21) Numéro de dépôt: 17716962.0
(22) Date de dépôt: 22.03.2017
(51) Int. Cl.: B64D 41/00

(54) **UNITÉ D'ALIMENTATION EN AIR SOUS PRESSION POUR AÉRONEF**
DRUCKLUFTVERSORGUNGSEINHEIT FÜR FLUGZEUGE
PRESSURE AIR SUPPLY UNIT FOR AIRCRAFT

(30) Priorité: 29.03.2016 FR 1652692
(43) Date de publication de la demande: 06.02.2019
(73) Titulaire: Safran Power Units, 31200 Toulouse (FR)
(72) Inventeur: SILET, Fabien, 77550 Moissy-Cramayel Cedex (FR); BATAILLER, Laurent, 77550 Moissy-Cramayel Cedex (FR)
(74) Mandataire: Cabinet Beau de Loménie
(86) Numéro de dépôt international: PCT/FR2017/050670
(87) Numéro de publication internationale: WO 2017/168074

(56) Documents cités:
- WO-A1-2015/145043
- US-A- 5 555 722
- US-A1- 2014 084 677

## Description

La présente invention concerne une unité d'alimentation en air sous pression pour aéronef.

Aux fins du présent exposé, le terme « aéronef » doit s'entendre au sens large. Il comprend les aéronefs à voilure fixe, notamment les avions à moteurs à turbines communément utilisés pour le transport de passagers, les aéronefs à voilure tournante et les aéronefs plus légers que l'air.

### Arrière-plan de l'invention

La plupart des aéronefs comportent une unité embarquée d'alimentation en air sous pression et/ou en électricité, généralement connue sous le nom de Groupe Auxiliaire de Puissance ou encore de « Auxiliary Power Unit » ou APU en anglais. De telles APU permettent, en consommant une partie du carburant de l'aéronef, de fournir à l'aéronef de l'air sous pression pour climatiser et/ou pressuriser la cabine, et/ou de l'électricité pour faire fonctionner divers autres équipements embarqués à bord de l'aéronef, sans utiliser le(s) moteur(s) de l'aéronef, ce qui est notamment utile lorsque l'aéronef est en stationnement au sol avec son (ses) moteur(s) à l'arrêt.

Cependant, l'utilisation des APU tend à être de plus en plus limitée par les aéroports et les exploitants, pour des raisons environnementales (émissions polluantes et sonores) et économiques (consommation de carburant).

Par conséquent, pour fournir de l'électricité et de l'air sous pression à l'aéronef en stationnement au sol, on a de plus en plus recours à des systèmes de soutien au sol, aussi connus sous le nom de « Ground Support Equipment » ou GSE en anglais.

On distingue deux types de GSE :
- les GSE mobiles, comprenant une unité d'alimentation en électricité (« Ground Power Unit » ou GPU en anglais) et/ou une unité de climatisation (« Air Conditioning Unit » ou ACU en anglais) capable de fournir de l'air sous pression ;
- les GSE fixes, qui sont soit des sources d'électricité (« Fixed Electrical Ground Power » ou FEGP en anglais), soit des sources d'air sous pression (« Pre-Conditioned Air » (PCA) ou encore ACU, « Air Conditioning Unit » en anglais).

Cependant, les GSE sont souvent des équipements dédiés, c'est-à-dire capables de fournir de l'air sous pression ou de l'électricité, mais pas les deux simultanément. Ils sont également encombrants au sol, ce qui peut poser des difficultés lorsque l'espace autour d'un aéronef en stationnement est restreint.

Il arrive également que les aéroports ne soient pas équipés de GSE, ou alors seulement de manière incomplète : par exemple, l'aéroport peut avoir à disposition des sources d'électricité, mais pas de sources d'air sous pression.

De plus, les GSE sont souvent moins performants que les APU en matière de fourniture d'air sous pression pour la climatisation de la cabine de l'aéronef, notamment dans des conditions climatiques extrêmes. Par exemple, il arrive qu'un GSE ne permette pas de refroidir suffisamment la cabine dans un climat très chaud (par exemple l'été dans les aéroports situés au Moyen-Orient), ou de la réchauffer suffisamment dans un climat très froid.

On souhaite donc disposer d'une unité d'alimentation embarquée à bord d'un aéronef et capable de fournir de l'air sous pression à celui-ci, sans consommer de carburant comme les APU classiques.

Le document WO2015/145043 décrit un turbomoteur comprenant un générateur de gaz, une turbine libre entraînée en rotation par les gaz dudit générateur de gaz et un couplage spontané dudit générateur de gaz et de ladite turbine libre.

### Objet et résumé de l'invention

La présente invention vise à répondre au moins partiellement à ce besoin.

Ce but est atteint grâce à une unité d'alimentation en air sous pression pour aéronef (ci-après « APU »), comprenant :
un compresseur de charge configuré pour fournir de l'air sous pression, le compresseur de charge comprenant un arbre de compresseur ;
un générateur de gaz configuré pour fournir une puissance via un arbre de sortie ;
un moteur électrique couplé audit arbre de compresseur ; et
un système de couplage configuré pour permettre à l'arbre de sortie d'entraîner l'arbre de compresseur et pour empêcher l'arbre de compresseur d'entraîner l'arbre de sortie.

Le moteur électrique permet à l'APU de fournir de l'air sous pression à l'aéronef sans consommer de carburant. Lorsque le générateur de gaz est à l'arrêt et le moteur électrique fonctionne, grâce au système de couplage, l'arbre de sortie n'est pas entraîné par l'arbre de compresseur. Le moteur électrique n'entraîne donc pas inutilement le générateur de gaz, d'où il résulte un gain appréciable en termes de consommation d'électricité.

Selon une possibilité, le système de couplage est un système de couplage non piloté, par exemple une roue libre.

Un tel système de couplage est léger, fiable et simple à entretenir, et simplifie également la commande de l'APU.

L'APU comprend en outre une boîte de vitesses, le moteur électrique étant couplé à l'arbre de compresseur via la boîte de vitesses.

La boîte de vitesses permet de déporter le moteur électrique par rapport à l'arbre de compresseur et à l'arbre de sortie, ce qui permet de mieux intégrer l'APU dans l'aéronef.

L'arbre de sortie et l'arbre de compresseur sont coaxiaux.

Ceci simplifie l'intégration de l'APU dans l'aéronef et la construction de la boîte de vitesses.

Selon une possibilité, une partie de l'arbre de sortie s'étend à travers l'arbre de compresseur.

L'encombrement de l'APU est alors limité.

Selon une possibilité, le compresseur de charge est interposé entre la boîte de vitesses et le générateur de gaz.

Ceci permet de limiter l'encombrement de la boîte de vitesses. En outre, le compresseur de charge et le compresseur du générateur de gaz sont alors suffisamment proches pour partager la même entrée d'admission d'air, ce qui est également bénéfique en termes d'intégration de l'APU.

Selon une possibilité, la boîte de vitesses est interposée entre le compresseur de charge et le générateur de gaz.

Ceci permet de déporter le compresseur de charge par rapport à l'arbre de sortie, ce qui peut permettre d'obtenir une meilleure intégration de l'APU au sein de l'aéronef.

Selon une possibilité, le système de couplage est situé dans un carter de la boîte de vitesses.

Selon une possibilité, l'APU présente un premier mode de fonctionnement dans lequel le moteur électrique est alimenté en électricité et entraîne le compresseur de charge.

Dans ce mode de fonctionnement, l'APU fournit de l'air sous pression à l'aéronef en utilisant seulement une source extérieure d'électricité, qui est généralement disponible dans les aéroports via les GSE. Ce mode de fonctionnement permet notamment de climatiser la cabine de l'aéronef sans émissions polluantes ou sonores liées à la consommation de carburant, et ce même en l'absence d'un PCA ou d'un ACU. De plus, contrairement à ces équipements au sol, l'APU permet de faire usage, le cas échéant, des systèmes de régulation climatique (« Environmental Control System » ou ECS en anglais) embarqués à bord de l'aéronef, d'où il résulte un meilleur contrôle de la climatisation cabine.

Selon une possibilité, le générateur de gaz comprenant un deuxième compresseur, une chambre de combustion et une turbine couplée à l'arbre de sortie, l'APU présente un deuxième mode de fonctionnement dans lequel la turbine est entraînée par des gaz expulsés par la chambre de combustion, et le moteur électrique est entraîné par la turbine.

Dans ce deuxième mode de fonctionnement, l'APU permet d'alimenter l'aéronef en air sous pression et/ou en électricité même dans le cas où aucune source extérieure d'électricité n'est disponible.

Selon une possibilité, le moteur électrique est un moteur réversible capable de produire de l'électricité.

Ainsi, dans le deuxième mode de fonctionnement, le moteur électrique peut fonctionner comme générateur électrique et fournir alors de l'électricité à des équipements embarqués à bord de l'aéronef.

La présente invention fournit également un aéronef comprenant une APU selon l'une quelconque des possibilités qui viennent d'être décrites.

Puisque l'APU est toujours disponible à bord de l'aéronef, la cabine de l'aéronef peut être climatisée au sol sans consommation de carburant, sans équipement extérieur autre qu'une source extérieure d'électricité généralement disponible dans les aéroports.

Selon une possibilité, l'aéronef comprend en outre une source d'électricité embarquée, le moteur électrique étant configuré pour recevoir de l'électricité depuis ladite source embarquée d'électricité.

Ainsi, l'APU peut fonctionner sans consommation de carburant, et en l'absence de toute source extérieure d'électricité au sol.

La présente invention fournit également un procédé de démarrage de l'APU, dans lequel :
on démarre le générateur de gaz ;
on accroît la vitesse de fonctionnement du générateur de gaz jusqu'à atteindre une vitesse de rotation désirée de l'arbre du moteur électrique ;
on démarre le moteur électrique et, dans le même temps, on arrête le générateur de gaz de manière à maintenir sensiblement la vitesse de rotation désirée de l'arbre du moteur électrique.

### Brève description des dessins

L'invention sera bien comprise et ses avantages apparaîtront mieux, à la lecture de la description détaillée qui suit de plusieurs modes de réalisations, représentés à titre d'exemples non limitatifs. La description se réfère aux dessins annexés sur lesquels :
- la figure 1 est un diagramme illustrant schématiquement une unité d'alimentation en air sous pression selon un premier mode de réalisation de l'invention ;
- la figure 2 est un diagramme illustrant schématiquement une unité d'alimentation en air sous pression selon un deuxième mode de réalisation de l'invention.

Sur les dessins, une flèche continue grasse représente un flux de carburant, une flèche continue fine à tête creuse représente un flux d'air, une flèche en pointillés représente un flux de puissance électrique, et une flèche courbe symbolise la rotation d'un arbre.

### Description détaillée de l'invention

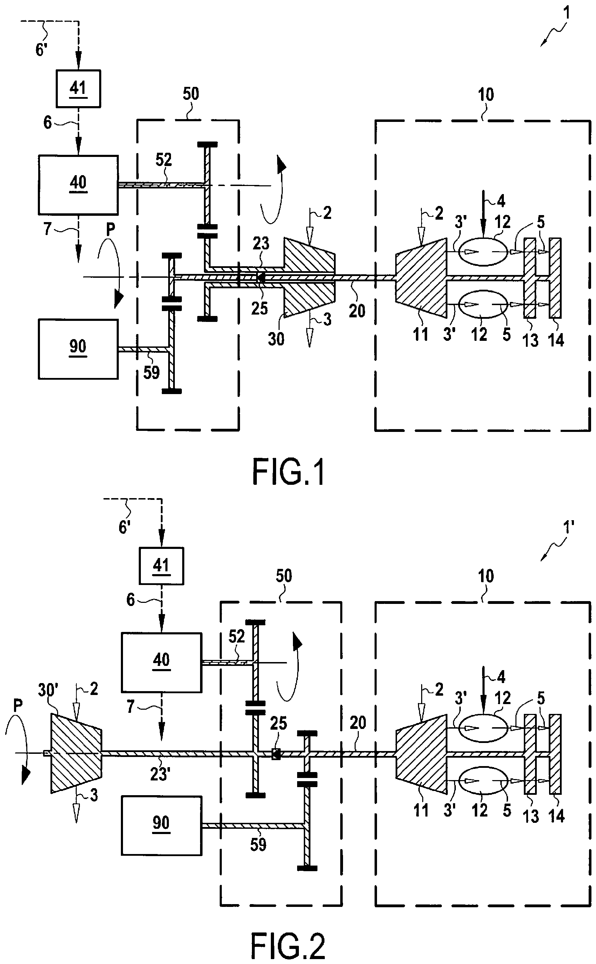

La figure 1 représente une unité d'alimentation en air sous pression 1 pour aéronef (ci-après dénommée « APU 1 » pour des raisons de commodité) selon un premier mode de réalisation de l'invention.

L'APU 1 comprend un compresseur de charge 30 et une partie motrice 10 configurée pour fournir une puissance via un arbre de sortie 20.

Le compresseur de charge 30 comprime de l'air 2 (par exemple, de l'air extérieur prélevé dans l'environnement de l'aéronef où est installée l'APU 1) et fournit de l'air sous pression 3 à l'aéronef, typiquement à un premier équipement (non représenté) de l'aéronef tel qu'un un système de régulation climatique (« Environment Control System » ou ECS en anglais) embarqué à bord de l'aéronef et permettant de climatiser la cabine de l'aéronef.

Le compresseur de charge 30 peut être, par exemple, un compresseur axial ou un compresseur centrifuge, cette dernière solution étant préférée, car l'encombrement et la masse du compresseur de charge 30 sont alors plus limités. Le compresseur de charge 30 comprend un arbre de compresseur 23. L'arbre de compresseur 23 peut être entraîné par l'arbre de sortie 20 comme cela sera décrit plus loin.

L'APU 1 comprend également un moteur électrique 40. Le moteur électrique 40 est configuré pour être alimenté en électricité 6. Pour cela, le moteur électrique 40 est en général relié électriquement à un connecteur électrique d'alimentation 41 configuré pour recevoir de l'électricité 6' depuis une source extérieure d'électricité.

Dans un exemple, la source extérieure d'électricité est un système de soutien au sol (ou GSE) du type GPU ou FEGP. À titre d'exemple, la source extérieure d'électricité délivre une tension de 115 V à une fréquence de 400 Hz. On notera que le connecteur électrique 41 peut, si nécessaire, inclure des équipements capables de modifier la tension, l'intensité et/ou la fréquence de l'électricité 6' qui lui est fournie avant qu'elle soit délivrée au moteur électrique 40.

En complément ou en alternative, la source extérieure d'électricité est une source d'électricité embarquée à bord de l'aéronef, telle qu'une pile à combustible ou une batterie, ce qui permet à l'APU 1 de fonctionner même en l'absence de tout système de soutien au sol (ou GSE).

Le moteur électrique 40 est couplé à l'arbre de compresseur 23 comme cela sera détaillé plus loin.

Selon l'invention, la partie motrice 10 est un générateur de gaz qui peut comprendre un deuxième compresseur 11, une chambre de combustion 12, une première turbine 13, et une deuxième turbine 14.

Le fonctionnement d'un tel générateur de gaz est bien connu. Schématiquement, le deuxième compresseur 11 comprime de l'air extérieur 2 et fournit de l'air sous pression 3' à la chambre de combustion 12. Du carburant 4 (qui peut être du carburant embarqué à bord de l'aéronef) est brûlé dans la chambre de combustion 12 avec l'air sous pression 3' pour générer des gaz de combustion 5 à enthalpie élevée. Ces gaz de combustion 5 sont expulsés par la chambre de combustion 12 et envoyés sur la première turbine 13 puis sur la deuxième turbine 14. Les gaz de combustion 5 subissent deux détentes successives dans la première turbine 13 et la deuxième turbine 14, ce qui fournit le travail mécanique nécessaire pour entraîner l'arbre de sortie 20, le compresseur de charge 30 et le moteur électrique 40.

Dans l'exemple représenté, la première turbine 13 et la deuxième turbine 14 sont couplées au deuxième compresseur 11 via l'arbre de sortie 20. Dans un autre exemple (non représenté), la première turbine 13 peut être couplée au deuxième compresseur 11 via un arbre de turbine distinct de l'arbre de sortie 20, la deuxième turbine 14 étant disposée sur l'arbre de sortie 20.

L'APU 1 peut également comprendre une boîte de vitesses 50 qui transmet la rotation de l'arbre de compresseur 23 au moteur électrique 40, et vice versa. Par exemple, le moteur électrique 40 est disposé sur un arbre d'entraînement moteur 52 de la boîte de vitesses 50. On notera que la boîte de vitesses 50 est généralement entourée d'un carter (non représenté).

La boîte de vitesses 50 permet de déporter le moteur électrique 40 par rapport à l'arbre de sortie 20, ce qui peut permettre d'obtenir une meilleure intégration de l'APU 1 au sein de l'aéronef.

Pour assurer le démarrage de la partie motrice 10, l'APU 1 peut comprendre en outre un starter 90, par exemple un starter électrique connu. Dans l'exemple représenté, le starter 90 est disposé sur un arbre de starter 59 de la boîte de vitesses 50.

L'APU 1 comprend en outre un système de couplage 25 interposé enter l'arbre de compresseur 23 et l'arbre de sortie 20.

Le système de couplage 25 est configuré pour permettre à l'arbre de sortie 20 d'entraîner l'arbre de compresseur 23 et pour empêcher l'arbre de compresseur 23 d'entraîner l'arbre de sortie 20. En d'autres termes, le système de couplage 25 est configuré de telle sorte que, lorsque l'arbre de compresseur 23 tourne plus vite que l'arbre de sortie 20, l'arbre de compresseur 23 ne transmet aucun couple à l'arbre de sortie 20, et de telle sorte que, lorsque l'arbre de sortie 20 tourne plus vite que l'arbre de compresseur 23, l'arbre de sortie 20 transmet un couple à l'arbre de compresseur 23 et l'entraîne en rotation, typiquement à la même vitesse que lui.

L'APU 1 présente un premier mode de fonctionnement destiné à fournir de l'air sous pression à l'aéronef sans consommer de carburant 4.

Dans ce mode de fonctionnement, l'APU 1 est alimentée en électricité 6' par une source extérieure d'électricité telle qu'un GSE, et le moteur électrique 40 est alimenté en électricité 6 par l'intermédiaire du connecteur électrique 41. Par suite, le moteur électrique 40 fonctionne et entraîne l'arbre de compresseur 23, et donc le compresseur 30. Le compresseur de charge 30 fournit alors de l'air sous pression 3 à l'aéronef.

Selon l'invention, un procédé d'alimentation en air sous pression d'un aéronef à l'aide de l'APU 1 comprend les étapes suivantes :
- on alimente l'APU 1 en électricité via le connecteur électrique d'alimentation 41, et
- on fournit l'air sous pression 3 produit par le compresseur de charge 30 à l'aéronef.

Ainsi, l'aéronef est alimenté en air sous pression 3, alors que l'APU 1 n'est alimentée qu'en électricité 6 et non en carburant 4. En d'autres termes, l'APU 1 peut fournir de l'air sous pression 3 sans qu'il ne soit nécessaire de démarrer la partie motrice 10, et donc sans les émissions polluantes et sonores associées. Il n'est pas non plus nécessaire de faire intervenir un GSE pour fournir de l'air sous pression à l'aéronef.

Dans ce mode de fonctionnement, le système de couplage 25 découple l'arbre de compresseur 23 de l'arbre de sortie 20 : ainsi, le moteur électrique 40 n'a pas à vaincre inutilement le couple résistif de la partie motrice 10 lorsqu'il démarre, ni à entraîner inutilement la partie motrice 10 en régime permanent. Il en résulte un gain appréciable en termes de consommation électrique et de temps de démarrage de l'APU 1.

De préférence, le système de couplage 25 est non piloté, c'est-à-dire dépourvu d'une unité de commande et/ou d'actuateurs configurés pour provoquer le couplage/découplage de l'arbre de compresseur 23 et de l'arbre de sortie 20. En d'autres termes, le système de couplage 25 est configuré de telle sorte que le couplage/découplage de l'arbre de compresseur 23 et de l'arbre de sortie 20 s'effectue sans commande extérieure, par exemple mécaniquement, en fonction des vitesses de rotation respectives de l'arbre de compresseur 23 et de l'arbre de sortie 20.

Par rapport à un système de couplage piloté classique, un tel système de couplage non piloté est considérablement plus léger, plus fiable et plus simple à entretenir, car ne comprenant pas d'actuateurs lourds, complexes et difficiles à entretenir. En outre, avec un système de couplage non piloté, la commande de l'APU 1 est simplifiée.

De préférence, le système de couplage 25 est une roue libre. Des roues libres adaptées pour les gammes de vitesse de rotation et de couple engendrées par le fonctionnement de la partie motrice 10 sont bien connues de l'homme du métier et ne sont donc pas décrites en détail ici.

De préférence, la roue libre est une roue libre à galets, aussi appelée roue libre à rouleaux. Ce type de roue libre est particulièrement adapté pour les gammes de vitesse de rotation et de couple engendrées par le fonctionnement de la partie motrice 10. À titre d'exemple illustratif, lorsque la partie motrice 10 fonctionne, l'arbre de sortie 20 tourne à une vitesse de 20000 à 100000 tours/minute (rpm), et la roue libre transmet un couple de 50 à 1000 N·m.

De préférence, la roue libre à galets est une roue libre dégageante (« centrifugal throwout freewheel » en anglais), c'est-à-dire que, lorsque la roue libre provoque le découplage mécanique de l'arbre de sortie 20 et de l'arbre de compresseur 23, les galets frottent initialement contre une piste intérieure, puis se séparent de cette piste intérieure sous l'effet de la force centrifuge. Ainsi, lorsque l'arbre de sortie 20 et l'arbre de compresseur 23 sont découplés, les galets ne frottent pas, ce qui accroît la durée de vie de la roue libre. La roue libre à galets peut aussi être une roue libre engageante (ou frontale) (« positive continuous engagement freewheel » en anglais).

De préférence, la roue libre est configurée de telle sorte que l'arbre de sortie 20 entraîne l'arbre de compresseur 23 dès que l'arbre de sortie 20 est entraîné en rotation par la partie motrice 10. En d'autres termes, la roue libre est configurée de telle sorte que le couplage entre l'arbre de sortie 20 et l'arbre de compresseur 23 s'effectue sans que l'arbre de sortie 20 ne doive atteindre une vitesse de rotation minimum.

L'APU 1 présente en outre un deuxième mode de fonctionnement destiné à alimenter l'aéronef en air sous pression même en l'absence d'une source extérieure d'électricité.

Dans ce deuxième mode de fonctionnement, la chambre de combustion 12 produit des gaz de combustion 5 à enthalpie élevée qui entraînent la première turbine 13 et la deuxième turbine 14 comme cela a été expliqué ci-dessus. Les turbines 13 et 14 entraînent alors l'arbre de sortie 20. Puisque l'arbre de sortie 20 est entraîné, le système de couplage 25 permet à l'arbre de sortie 20 d'entraîner l'arbre de compresseur 23. Par suite, le compresseur de charge 30 est entraîné et fournit de l'air sous pression 3 à l'aéronef.

Selon l'invention, un autre procédé d'alimentation en air sous pression d'un aéronef à l'aide de l'APU 1 comprend les étapes suivantes :
- on alimente la chambre de combustion 12 en air 3' comprimé par le deuxième compresseur 11 et en carburant 4,
- on fournit l'air sous pression 3 produit par le compresseur de charge 30 à l'aéronef.

Ainsi, la cabine de l'aéronef peut être climatisée même en l'absence de toute source extérieure d'électricité.

Dans certains modes de réalisation, le moteur électrique 40 est un moteur réversible, c'est-à-dire un moteur électrique capable de produire de l'électricité lorsqu'on lui fournit une puissance mécanique. En d'autres termes, le moteur électrique 40 peut également fonctionner comme générateur électrique. Dans ce cas, dans le deuxième mode de fonctionnement, le moteur électrique 40 est entraîné par l'arbre de sortie 20 via l'arbre de compresseur 23 et la boîte de vitesses 50. Le moteur électrique 40 produit de l'électricité 7, qui est typiquement fournie à un deuxième équipement (non représenté) de l'aéronef, tel qu'un système de dégivrage, un système de démarrage des moteurs principaux, le réseau de bord de l'aéronef, etc.

Selon l'invention, un procédé d'alimentation en électricité d'un aéronef à l'aide de l'APU 1 dans laquelle le moteur électrique 40 est un moteur réversible comprend les étapes suivantes :
- on alimente la chambre de combustion 12 en air 3' comprimé par le deuxième compresseur 11 et en carburant 4,
- on fournit l'électricité 7 produite par le moteur électrique 40 à l'aéronef.

Selon l'invention, un procédé d'alimentation en air sous pression et en électricité d'un aéronef à l'aide de l'APU 1 dans laquelle le moteur électrique 40 est un moteur réversible comprend les étapes suivantes :
- on alimente la chambre de combustion 12 en air 3' comprimé par le deuxième compresseur 11 et en carburant 4,
- on fournit l'air sous pression 3 produit par le compresseur de charge 30 à l'aéronef, et
- on fournit l'électricité 7 produite par le moteur électrique 40 à l'aéronef.

Dans certains modes de réalisation (non représentés), le starter 90 est un moteur électrique réversible. Le starter 90 est alors capable de produire de l'électricité 7 lorsqu'il est entraîné par l'arbre de sortie 20 via la boîte de vitesses 50, et donc de jouer le même rôle que le moteur électrique 40 dans les procédés décrits ci-dessus.

L'APU 1 peut être lancée dans le premier mode de fonctionnement de la manière suivante.

On démarre tout d'abord la partie motrice 10 à l'aide du starter 90. Une fois que la partie motrice 10 est lancée, on accroît sa vitesse de fonctionnement (par exemple en augmentant le débit de carburant 4 et d'air sous pression 3') jusqu'à ce que l'arbre d'entraînement moteur 52 atteigne une vitesse de rotation désirée, cette vitesse de rotation pouvant correspondre, par exemple, à la vitesse de rotation nécessaire pour obtenir un débit d'air sous pression 3 nécessaire pour le premier équipement. L'arbre de sortie 20 entraîne alors l'arbre de compresseur 23 via le système de couplage 25 comme cela a été expliqué ci-dessus. Par suite, le compresseur de charge 30 (et éventuellement le moteur électrique 40) sont entraînés en rotation.

Une fois que la vitesse de rotation désirée de l'arbre d'entraînement moteur 52 est atteinte, on démarre le moteur électrique 40, c'est-à-dire que l'on fournit au moteur électrique 40 une puissance électrique qui croît jusqu'à atteindre la puissance électrique nécessaire pour maintenir la vitesse de rotation désirée de l'arbre d'entraînement moteur 52, et, dans le même temps, on arrête la partie motrice 10 (par exemple en diminuant progressivement l'arrivée de carburant 4), à maintenir sensiblement la vitesse de rotation désirée de l'arbre d'entraînement moteur 52.

De cette manière, pour démarrer le moteur électrique 40, la seule puissance électrique à fournir est la puissance nécessaire pour vaincre le couple résistif interne du moteur électrique 40. Au contraire, si on démarrait l'APU 1 en démarrant directement le moteur électrique 40, il faudrait fournir à celui-ci une puissance nécessaire pour vaincre son propre couple résistif et celui du compresseur de charge 30. Le connecteur électrique 41 peut donc être configuré avec une puissance électrique maximale moindre, ce qui est bénéfique en termes d'encombrement et de masse de l'APU 1.

De préférence, une partie de l'arbre de sortie 20 s'étend à travers l'arbre de compresseur 23, ce qui permet de limiter l'encombrement de l'APU 1.

De préférence, l'arbre de sortie 20 et l'arbre de compresseur 23 sont coaxiaux, le sens de rotation de l'arbre de sortie 20 étant repéré par le repère P sur la figure 1. Ceci permet de simplifier la construction du système de couplage 25 et son montage dans l'APU 1.

De préférence, comme cela est représenté sur la figure 1, le compresseur de charge 30 est situé ou interposé entre la partie motrice 10 et la boîte de vitesses 50, c'est-à-dire que l'entraînement de l'arbre de compresseur 23 par l'arbre de sortie 20 s'effectue via le système de couplage 25, sans faire intervenir la boîte de vitesses 50. La boîte de vitesses 50 présente donc seulement une entrée, pour l'arbre de sortie 20 et l'arbre de compresseur 23, et deux sorties, respectivement pour l'arbre d'entraînement moteur 52 et pour l'arbre de starter 59. Ceci permet de limiter l'encombrement de la boîte de vitesses 50. En outre, le compresseur de charge 30 et le deuxième compresseur 11 sont suffisamment proches pour partager la même entrée d'admission d'air 2, ce qui est également bénéfique en termes d'intégration de l'APU 1.

De préférence, le système de couplage 25 est situé dans un carter de la boîte de vitesses 50, ce qui permet d'utiliser le système de lubrification interne de la boîte de vitesses 50 pour lubrifier le système de couplage 25.

La figure 2 représente une APU 1' selon un deuxième mode de réalisation de l'invention. Les éléments identiques à ceux du premier mode de réalisation sont repérés par des signes de référence identiques et ne sont pas décrits en détail à nouveau.

Dans ce deuxième mode de réalisation, le compresseur de charge (repéré par 30') est situé en sortie de la boîte de vitesses 50. Ainsi, la boîte de vitesses 50 est interposée entre le compresseur de charge 30' et la partie motrice 10. Lorsque l'arbre de sortie 20 entraîne l'arbre de compresseur 23' du compresseur de charge 30', cet entraînement s'effectue donc via la boîte de vitesses 50 et le système de couplage 25.Ce mode de réalisation permet de déporter le compresseur de charge 30' par rapport à l'arbre de sortie 20, ce qui peut permettre d'obtenir une meilleure intégration de l'APU l'au sein de l'aéronef.

Le système de couplage 25 peut être situé dans un carter de la boîte de vitesses 50 et intégré dans celle-ci comme cela est représenté sur la figure 2, de sorte que l'arbre de starter 59 est couplé à l'arbre de sortie 20 via la boîte de vitesses 50, et non via le système de couplage 25. Ceci permet au starter 90 d'entraîner l'arbre de sortie 20 et donc de démarrer la partie motrice 10. De plus, on peut alors utiliser le système de lubrification interne de la boîte de vitesses 50 pour lubrifier le système de couplage 25.

De préférence, l'arbre de sortie 20 et l'arbre de compresseur 23 sont coaxiaux, le sens de rotation de l'arbre de sortie 20 étant repéré par le repère P sur la figure 2. Ainsi, il n'est pas nécessaire de prévoir dans la boîte de vitesses 50 une roue dentée pour transmettre le couple de l'arbre de sortie 20 à l'arbre de compresseur 23, ce couple étant transmis via le système de couplage 25.

Le fonctionnement de l'APU 1' est identique au fonctionnement de l'APU 1 et ne sera donc pas décrit en détail.

La présente invention fournit une APU capable, selon les équipements au sol disponibles à l'aéroport où stationne l'aéronef, d'alimenter les équipements de l'aéronef en air sous pression et/ou en électricité, même en l'absence de source extérieure d'air sous pression. En outre, dans le cas où une source électrique extérieure est disponible, l'APU selon l'invention permet de fournir de l'air sous pression, et donc de climatiser la cabine de l'aéronef, sans émissions polluantes ou sonores liées à la consommation de carburant.

On remarquera que les modes de fonctionnement décrits ci-dessus sont obtenus à l'aide d'un unique système de couplage, à savoir le système de couplage 25, ce qui limite la complexité de l'APU 1 ou 1'.

De plus, on remarquera que le deuxième mode de fonctionnement décrit ci-dessus peut tout à fait être utilisé lorsque l'aéronef n'est pas au sol, par exemple en cas de défaillance des équipements normalement chargés de fournir (par exemple à partir de la puissance produite par les moteurs de l'aéronef) de l'air sous pression et/ou de l'électricité à l'aéronef durant le vol.

Enfin, bien que cela ne soit pas représenté sur les figures, l'APU 1 (ou 1') peut comprendre une unité de commande reliée à divers capteurs et actuateurs et qui est configurée pour mesurer et/ou commander divers paramètres de fonctionnement de l'APU, tels que la vitesse de rotation de l'arbre de sortie 20 et de l'arbre de compresseur 23, le débit et la pression de l'air en entrée et en sortie du compresseur de charge 30 (ou 30') et du deuxième compresseur 11, le débit en carburant 4 à l'entrée de la chambre de combustion 12, la tension fournie au moteur électrique 40 ou délivrée par le moteur électrique 40, etc. L'unité de commande peut également commander l'activation ou la désactivation de l'APU 1 (ou 1') ou la commutation entre ses différents modes de fonctionnement, par exemple sur la base d'une commande fournie par un utilisateur.

Quoique la présente invention ait été décrite en se référant à des exemples de réalisation spécifiques, il est évident que des modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Unité d'alimentation en air sous pression (1 ; 1') pour aéronef, comprenant :
un compresseur de charge (30 ; 30') configuré pour fournir de l'air sous pression (3), le compresseur de charge (30 ; 30') comprenant un arbre de compresseur (23 ; 23'),
un générateur de gaz (10) configuré pour fournir une puissance via un arbre de sortie (20) ;
une boîte de vitesses (50) ;
un moteur électrique (40), le moteur électrique (40) étant couplé audit arbre de compresseur (23 ; 23') via la boîte de vitesses (50) ; et
un système de couplage (25) configuré pour permettre à l'arbre de sortie (20) d'entraîner l'arbre de compresseur (23 ; 23') et pour empêcher l'arbre de compresseur (23 ; 23') d'entraîner l'arbre de sortie (20),
l'arbre de sortie (20) et l'arbre de compresseur (23 ; 23') étant coaxiaux.

2. Unité d'alimentation en air sous pression (1 ; 1') pour aéronef selon la revendication 1, dans laquelle le système de couplage (25) est un système de couplage non piloté, par exemple une roue libre.

3. Unité d'alimentation en air sous pression (1) pour aéronef selon la revendication 1 ou 2, dans laquelle une partie de l'arbre de sortie (20) s'étend à travers l'arbre de compresseur (23).

4. Unité d'alimentation en air sous pression (1) pour aéronef selon la revendication 3, dans laquelle le compresseur de charge (30) est interposé entre la boîte de vitesses (50) et le générateur de gaz (10).

5. Unité d'alimentation en air sous pression (1') pour aéronef selon la revendication 1 ou 2, dans laquelle la boîte de vitesses (50) est interposée entre le compresseur de charge (30') et le générateur de gaz (10).

6. Unité d'alimentation en air sous pression (1') pour aéronef selon l'une quelconque des revendications 1 à 5, dans laquelle le système de couplage (25) est situé dans un carter de la boîte de vitesses (50).

7. Unité d'alimentation en air sous pression (1 ; 1') pour aéronef selon l'une quelconque des revendications 1 à 6, dans laquelle le moteur électrique (40) est un moteur réversible capable de produire de l'électricité (7).

8. Aéronef comprenant une unité d'alimentation en air sous pression (1 ; 1') selon l'une quelconque des revendications 1 à 7.

9. Aéronef selon la revendication 8, comprenant en outre une source d'électricité embarquée, le moteur électrique (40) étant configuré pour recevoir de l'électricité (6') depuis ladite source embarquée d'électricité.

10. Procédé de démarrage de l'unité d'alimentation en air sous pression (1 ; 1') pour aéronef selon l'une quelconque des revendications 1 à 7, dans lequel :
on démarre le générateur de gaz (10) ;
on accroît la vitesse de fonctionnement du générateur de gaz (10) jusqu'à atteindre une vitesse de rotation désirée de l'arbre (52) du moteur électrique (40) ;
on démarre le moteur électrique (40) et, dans le même temps, on arrête le générateur de gaz (10) de manière à maintenir sensiblement la vitesse de rotation désirée de l'arbre (52) du moteur électrique (40).

## Patentansprüche

1. Druckluftversorgungseinheit (1; 1') für ein Luftfahrzeug, umfassend:
einen Ladekompressor (30; 30'), der dazu ausgestaltet ist, Druckluft (3) zu liefern, wobei der Ladekompressor (30; 30') eine Kompressorwelle (23; 23') umfasst,
einen Gasgenerator (10), der dazu ausgestaltet ist, über eine Ausgangswelle (20) eine Leistung zu liefern,
einen Getriebekasten (50),
einen Elektromotor (40), wobei der Elektromotor (40) mit der Kompressorwelle (23; 23') über den Getriebekasten (50) gekoppelt ist, und
ein Kopplungssystem (25), das dazu ausgestaltet ist, der Ausgangswelle (20) zu erlauben, die Kompressorwelle (23; 23') anzutreiben und die Kompressorwelle (23; 23') daran zu hindern, die Ausgangswelle (20) anzutreiben,
wobei die Ausgangswelle (20) und die Kompressorwelle (23; 23') koaxial sind.

2. Druckluftversorgungseinheit (1; 1') für ein Luftfahrzeug nach Anspruch 1, wobei das Kopplungssystem (25) ein nicht gesteuertes Kopplungssystem ist, etwa ein Freilauf.

3. Druckluftversorgungseinheit (1) für ein Luftfahrzeug nach Anspruch 1 oder 2, wobei ein Teil der Ausgangswelle (20) sich durch die Kompressorwelle (23) erstreckt.

4. Druckluftversorgungseinheit (1) für ein Luftfahrzeug nach Anspruch 3, wobei die Kompressorwelle (30) zwischen dem Getriebekasten (50) und dem Gasgenerator (10) angeordnet ist.

5. Druckluftversorgungseinheit (1') für ein Luftfahrzeug nach Anspruch 1 oder 2, wobei der Getriebekasten (50) zwischen der Kompressorwelle (30') und dem Gasgenerator (10) angeordnet ist.

6. Druckluftversorgungseinheit (1') für ein Luftfahrzeug nach einem der Ansprüche 1 bis 5, wobei das Kopplungssystem (25) sich in einem Gehäuse des Getriebekastens (50) befindet.

7. Druckluftversorgungseinheit (1; 1') für ein Luftfahrzeug nach einem der Ansprüche 1 bis 6, wobei der Elektromotor (40) ein umkehrbarer Motor ist, der in der Lage ist, elektrischen Strom (7) zu erzeugen.

8. Luftfahrzeug, das eine Druckluftversorgungseinheit (1; 1') nach einem der Ansprüche 1 bis 7 umfasst.

9. Luftfahrzeug nach Anspruch 8, das ferner eine mitgeführte elektrische Stromquelle umfasst, wobei der Elektromotor (40) dazu ausgestaltet ist, elektrischen Strom (6') von der mitgeführten elektrischen Stromquelle zu empfangen.

10. Verfahren zum Inbetriebsetzen der Druckluftversorgungseinheit (1; 1') für ein Luftfahrzeug nach einem der Ansprüche 1 bis 7, wobei:
der Gasgenerator (10) in Betrieb gesetzt wird,
die Arbeitsgeschwindigkeit des Gasgenerators (10) erhöht wird, bis eine gewünschte Drehzahl der Welle (52) des Elektromotors (40) erreicht ist,
der Elektromotor (40) in Betrieb gesetzt wird und gleichzeitig der Gasgenerator (10) auf eine Weise angehalten wird, dass im Wesentlichen die gewünschte Drehzahl der Welle (52) des Elektromotors (40) beibehalten wird.

## Claims

1. A pressurized air supply unit (1; 1') for an aircraft, comprising:
• a load compressor (30; 30') configured to supply pressurized air (3), the load compressor (30; 30') comprising a compressor shaft (23; 23');
• a gas generator (10) configured to supply power via an output shaft (20);
• a gearbox (50);
• an electric motor (40), the electric motor (40) being coupled to said compressor shaft (23; 23') via the gearbox (50); and
• a coupling system (25) configured to enable the output shaft (20) to drive the compressor shaft (23; 23') and to prevent the compressor shaft (23; 23') from driving the output shaft (20),
the output shaft (20) and the compressor shaft (23) being arranged coaxially.

2. A pressurized air supply unit (1; 1') for an aircraft according to claim 1, wherein the coupling system (25) is a non-controlled coupling system, e.g. a freewheel.

3. A pressurized air supply unit (1) for an aircraft according to claim 1 or 2, wherein a portion of the output shaft (20) extends through the compressor shaft (23) .

4. A pressurized air supply unit (1) for an aircraft according to claim 3, wherein the load compressor (30) is interposed between the gearbox (50) and the gas generator (10) .

5. A pressurized air supply unit (1') for an aircraft according to claim 1 or 2, wherein the gearbox (50) is interposed between the load compressor (30') and the gas generator (10).

6. A pressurized air supply unit (1') for an aircraft according to any one of claims 1 to 5, wherein the coupling system (25) is situated in a casing of the gearbox (50).

7. A pressurized air supply unit (1; 1') for an aircraft according to any one of claims 1 to 6, wherein the electric motor (40) is a reversible motor capable of producing electricity (7).

8. An aircraft including a pressurized air supply unit (1; 1') according to any one of claims 1 to 7.

9. An aircraft according to claim 8, further comprising an on-board source of electricity, the electric motor (40) being configured to receive electricity (6') from said on-board source of electricity.

10. A method of starting the pressurized air supply unit (1; 1') for an aircraft according to any one of claims 1 to 7, the method comprising the following steps:
• starting the gas generator (10);
• increasing the speed of operation of the gas generator (10) until it reaches a desired rotation speed of the shaft (52) of the electric motor (40); and
• starting the electric motor (40) and, simultaneously, stopping the gas generator (10) so as to maintain the desired rotation speed of the shaft (52) of the electric motor (40) substantially constant.
